# EUROPEAN PATENT APPLICATION

(11) **EP 4 628 877 A1**
(43) Date of publication of application: **08.10.2025**
(21) Application number: 23910863.2
(22) Date of filing: 28.12.2023
(51) Int. Cl.: G01N 23/04, G01V 5/00

(54) **IMAGING POSITIONING METHOD, AND IMAGING DETECTION SYSTEM**

(30) Priority: 30.12.2022 CN 202211742845
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); LI, Yuanjing, Beijing 100084 (CN); HUANG, Qingping, Beijing 100084 (CN); FENG, Bo, Beijing 100084 (CN); SUN, Yunda, Beijing 100084 (CN); ZHANG, Liguo, Beijing 100084 (CN); CHANG, Ming, Beijing 100084 (CN); JIN, Xin, Beijing 100084 (CN); SHEN, Le, Beijing 100084 (CN); HE, Zhifeng, Beijing 100084 (CN)
(74) Representative: Winter, Brandl - Partnerschaft mbB
(86) International application number: PCT/CN2023/142890
(87) International publication number: WO 2024/140948

(57) **Abstract**

The present disclosure provides an imaging positioning method and an imaging inspection system, which may be applied to a field of security inspection technology. The method includes: performing a first inspection on an object by a first inspection system to generate a first inspection information; determining at least one suspect position of the object according to the first inspection information; conveying the object to a second inspection system by a conveying system, where the second inspection system is configured to generate a first imaging beam plane and a second imaging beam plane; locating the object on the first imaging beam plane, and performing a second inspection on the object to generate a second inspection information; determining at least one target position of the object according to the first inspection information and the second inspection information, where the target position is associated with the suspect position; and controlling the conveying system to move the object from the first imaging beam plane to the second imaging beam plane according to a predetermined distance between the first imaging beam plane and the second imaging beam plane and a current coordinate information of the at least one target position, so that the at least one target position of the object is located on the second imaging beam plane, so as to perform a third inspection on the object.

## Description

This application claims priority to Chinese Patent Application No. 202211742845.9, filed on December 30, 2022, the entire content of which is incorporated herein by reference in its entirety.

### TECHNICAL FIELD

Embodiments of the present disclosure generally relate to a field of security inspection technology, and in particular to an imaging positioning method and an imaging inspection system.

### BACKGROUND

In existing security inspection technologies, a single-pass inspection scheme is generally adopted. For example, X-rays are used to inspect luggage objects, and if any suspicious object is detected, the luggage objects may be manually inspected.

### SUMMARY

According to a first aspect of the present disclosure, an imaging positioning method is provided, including but not limited to: performing a first inspection on an object by a first inspection system to generate a first inspection information; determining at least one suspect position of the object according to the first inspection information; conveying the object to a second inspection system by a conveying system, where the second inspection system is configured to generate a first imaging beam plane and a second imaging beam plane for inspecting the object, and a predetermined distance is provided between the first imaging beam plane and the second imaging beam plane; locating the object on the first imaging beam plane, and performing a second inspection on the object by the second inspection system to generate a second inspection information; determining at least one target position of the object according to the first inspection information and the second inspection information, where the target position is associated with the suspect position; and controlling the conveying system to move the object from the first imaging beam plane to the second imaging beam plane according to the predetermined distance and a current coordinate information of the at least one target position, so that the at least one target position of the object is located on the second imaging beam plane, so as to perform a third inspection on the object by the second inspection system using the second imaging beam plane, where the current coordinate information is a coordinate information of the at least one target position after the second inspection is completed and before the conveying system moves the object from the first imaging beam plane to the second imaging beam plane.

In some exemplary embodiments, the determining at least one suspect position of the object according to the first inspection information includes: generating a first image information of the object according to the first inspection information; and determining the at least one suspect position of the object according to the first image information.

In some exemplary embodiments, the method further includes: before determining the at least one target position of the object according to the first inspection information and the second inspection information, generating a second image information of the object according to the second inspection information.

In some exemplary embodiments, the determining at least one target position of the object according to the first inspection information and the second inspection information includes: determining a correlation between the first image information generated from the first inspection information and the second image information generated from the second inspection information according to the first image information and the second image information; and determining the at least one target position of the object according to the at least one suspect position and the correlation.

In some exemplary embodiments, the method further includes: determining the current coordinate information of the at least one target position according to a current position of the at least one target position relative to the first imaging beam plane and coordinates of the first imaging beam plane after the second inspection is completed and before the conveying system moves the object from the first imaging beam plane to the second imaging beam plane.

In some exemplary embodiments, the controlling the conveying system to move the object from the first imaging beam plane to the second imaging beam plane according to the predetermined distance and a current coordinate information of the at least one target position includes: calculating a distance from the at least one target position to the second imaging beam plane according to the predetermined distance and the current coordinate information of the at least one target position; and moving the object in a conveying direction by the calculated distance from the first imaging beam plane by the conveying system, so as to locate the at least one target position on the second imaging beam plane.

In some exemplary embodiments, the at least one target position includes one or more target positions, and the method includes: controlling the conveying system to move the object from the first imaging beam plane to the second imaging beam plane according to the predetermined distance and current coordinate information of each target position in the at least one target position, so that each target position is sequentially located on the second imaging beam plane to perform the third inspection.

In some exemplary embodiments, the coordinate information includes a first-direction coordinate information and a second-direction coordinate information, and the controlling the conveying system to move the object from the first imaging beam plane to the second imaging beam plane according to the predetermined distance and a current coordinate information of the at least one target position includes: controlling an inspection component configured to form the second imaging beam plane to move in a first direction according to the first-direction coordinate information of the at least one target position; and controlling the conveying system to move the object in a second direction according to the predetermined distance and the second-direction coordinate information of the at least one target position, so that the at least one target position is located on the second imaging beam plane, where the second direction is parallel to a conveying direction of the conveying system, and the first direction is perpendicular to the second direction.

In some exemplary embodiments, the method further includes: after moving the object in the conveying direction by the calculated distance from the first imaging beam plane by the conveying system, determining whether a conveying distance deviation in the conveying direction has occurred in the conveying system.

In some exemplary embodiments, the method further includes: in response to determining that a conveying distance deviation in the conveying direction has occurred in the conveying system, continuing to move the object by the conveying system according to the conveying distance deviation so that the at least one target position is located on the second imaging beam plane.

In some exemplary embodiments, the conveying system includes a conveyor belt for conveying the object, a driving roller for driving the conveyor belt to rotate, and a driven roller arranged downstream of the driving roller in the conveying direction and in frictional engagement with the conveyor belt, the method further including: determining a rotation distance that the driving roller is required to rotate in order to move the conveyor belt by the calculated distance in the conveying direction; and driving the driving roller to rotate according to the determined rotation distance so as to drive the conveyor belt to move in the conveying direction, where the conveying distance deviation is a difference between an actual distance the conveyor belt moves while the driving roller rotates by the calculated rotation distance and the calculated distance.

In some exemplary embodiments, the conveying system further includes a first encoder and a second encoder, the first encoder is disposed at the driving roller or at a motor for driving the driving roller to rotate so as to generate an encoded value corresponding to a rotation position of the driving roller or the motor, the second encoder is disposed at the driven roller so as to generate an encoded value corresponding to a rotation position of the driven roller, the method including: acquiring a first initial encoded value from the first encoder indicating an initial position of the driving roller and a second initial encoded value from the second encoder indicating an initial position of the driven roller when the conveying system starts moving the object from the first imaging beam plane to the second imaging beam plane after the second inspection is completed; calculating a first stop encoded value of the first encoder when the driving roller stops rotating after the conveyor belt has moved the calculated distance in the conveying direction, where the determining the rotation distance includes calculating the first stop encoded value; driving the driving roller to rotate so as to drive the conveyor belt and the driven roller to rotate until a current encoded value of the first encoder reaches the first stop encoded value, and acquiring a second stop encoded value of the second encoder indicating a stop position of the driven roller at that point; and determining whether a conveying distance deviation of the conveyor belt has occurred according to the first initial encoded value, the second initial encoded value, the first stop encoded value, and the second stop encoded value.

In some exemplary embodiments, the determining whether a conveying distance deviation of the conveyor belt has occurred according to the first initial encoded value, the second initial encoded value, the first stop encoded value, and the second stop encoded value includes: determining a first value representing a rotation distance of the driving roller according to the first initial encoded value and the first stop encoded value; determining a second value representing a rotation distance of the driven roller according to the second initial encoded value and the second stop encoded value; determining that no conveying distance deviation of the conveyor belt has occurred if the first value is equal to the second value; and determining that a conveying distance deviation of the conveyor belt has occurred if the first value is not equal to the second value.

In some exemplary embodiments, the method further includes: adjusting a tension of the conveyor belt if it is determined that a conveying distance deviation of the conveyor belt has occurred.

In some exemplary embodiments, the first inspection system includes a CT or DR inspection device, and the second inspection system includes a DR inspection device for generating the first imaging beam plane and an XRD inspection device for generating the second imaging beam plane.

In a second aspect of the present disclosure, an imaging inspection system is provided, including a first inspection system, a second inspection system, a conveying system, and a processor, where the first inspection system is configured to perform a first inspection on an object to generate a first inspection information; the conveying system is configured to convey the object from the first inspection system to the second inspection system; the second inspection system is configured to generate a first imaging beam plane and a second imaging beam plane for inspecting the object conveyed by the conveying system, so as to perform a second inspection on the object and generate a second inspection information when the object is located on the first imaging beam plane, and a predetermined distance is provided between the first imaging beam plane and the second imaging beam plane; the processor is configured to: determine at least one suspect position of the object according to the first inspection information; determine at least one target position of the object according to the first inspection information and the second inspection information, where the target position is associated with the suspect position; and control the conveying system to move the object from the first imaging beam plane to the second imaging beam plane according to the predetermined distance and a current coordinate information of the at least one target position, so that the at least one target position of the object is located on the second imaging beam plane; and the second inspection system is further configured to perform a third inspection on the object when the at least one target position of the object is located on the second imaging beam plane, and the current coordinate information is a coordinate information of the at least one target position after the second inspection is completed and before the conveying system moves the object from the first imaging beam plane to the second imaging beam plane.

In some exemplary embodiments, the processor is further configured to: generate a first image information of the object according to the first inspection information; and determine the at least one suspect position of the object according to the first image information.

In some exemplary embodiments, the processor is further configured to generate a second image information of the object according to the second inspection information before determining the at least one target position of the object according to the first inspection information and the second inspection information.

In some exemplary embodiments, the processor is further configured to: determine a correlation between the first image information generated from the first inspection information and the second image information generated from the second inspection information according to the first image information and the second image information; and determine the at least one target position of the object according to the at least one suspect position and the correlation.

In some exemplary embodiments, the processor is further configured to: determine the current coordinate information of the at least one target position according to a current position of the at least one target position relative to the first imaging beam plane and coordinates of the first imaging beam plane after the second inspection is completed and before the conveying system moves the object from the first imaging beam plane to the second imaging beam plane.

In some exemplary embodiments, the processor is further configured to: calculate a distance from the at least one target position to the second imaging beam plane according to the predetermined distance and the current coordinate information of the at least one target position; and move the object in a conveying direction by the calculated distance from the first imaging beam plane by the conveying system, so as to locate the at least one target position on the second imaging beam plane.

In some exemplary embodiments, the at least one target position includes one or more target positions; and the processor is further configured to control the conveying system to move the object from the first imaging beam plane to the second imaging beam plane according to the predetermined distance and current coordinate information of each target position in the at least one target position, so that each target position is sequentially located on the second imaging beam plane to perform the third inspection.

In some exemplary embodiments, the coordinate information includes a first-direction coordinate information and a second-direction coordinate information; and the processor is further configured to: control an inspection component configured to form the second imaging beam plane to move in a first direction according to the first-direction coordinate information of the at least one target position; and control the conveying system to move the object in a second direction according to the predetermined distance and the second-direction coordinate information of the at least one target position, so that the at least one target position is located on the second imaging beam plane, where the second direction is parallel to a conveying direction of the conveying system, and the first direction is perpendicular to the second direction.

In some exemplary embodiments, the processor is further configured to determine whether a conveying distance deviation in the conveying direction has occurred in the conveying system after moving the object in the conveying direction by the calculated distance from the first imaging beam plane by the conveying system.

In some exemplary embodiments, the processor is further configured to, in response to determining that a conveying distance deviation in the conveying direction has occurred in the conveying system, continue to move the object by the conveying system according to the conveying distance deviation so that the at least one target position is located on the second imaging beam plane.

In some exemplary embodiments, the conveying system includes a conveyor belt for conveying the object, a driving roller for driving the conveyor belt to rotate, and a driven roller arranged downstream of the driving roller in the conveying direction and in frictional engagement with the conveyor belt; and the processor is further configured to: determine a rotation distance that the driving roller is required to rotate in order to move the conveyor belt by the calculated distance in the conveying direction; and drive the driving roller to rotate according to the determined rotation distance so as to drive the conveyor belt to move in the conveying direction, where the conveying distance deviation is a difference between an actual distance the conveyor belt moves while the driving roller rotates by the calculated rotation distance and the calculated distance.

In some exemplary embodiments, the conveying system further includes a first encoder and a second encoder, the first encoder is disposed at the driving roller or at a motor for driving the driving roller to rotate so as to generate an encoded value corresponding to a rotation position of the driving roller or the motor, the second encoder is disposed at the driven roller so as to generate an encoded value corresponding to a rotation position of the driven roller; and the processor is further configured to: acquire a first initial encoded value from the first encoder indicating an initial position of the driving roller and a second initial encoded value from the second encoder indicating an initial position of the driven roller when the conveying system starts moving the object from the first imaging beam plane to the second imaging beam plane after the second inspection is completed; calculate a first stop encoded value of the first encoder when the driving roller stops rotating after the conveyor belt has moved the calculated distance in the conveying direction, where the determining the rotation distance includes calculating the first stop encoded value; drive the driving roller to rotate so as to drive the conveyor belt and the driven roller to rotate until a current encoded value of the first encoder reaches the first stop encoded value, and acquire a second stop encoded value of the second encoder indicating a stop position of the driven roller at that point; and determine whether a conveying distance deviation of the conveyor belt has occurred according to the first initial encoded value, the second initial encoded value, the first stop encoded value, and the second stop encoded value.

In some exemplary embodiments, the processor is further configured to: determine a first value representing a rotation distance of the driving roller according to the first initial encoded value and the first stop encoded value; determine a second value representing a rotation distance of the driven roller according to the second initial encoded value and the second stop encoded value; determine that no conveying distance deviation of the conveyor belt has occurred if the first value is equal to the second value; and determine that a conveying distance deviation of the conveyor belt has occurred if the first value is not equal to the second value.

In some exemplary embodiments, the processor is further configured to: adjust a tension of the conveyor belt if it is determined that a conveying distance deviation of the conveyor belt has occurred.

### BRIEF DESCRIPTION OF THE DRAWINGS

Through the following description of the embodiments of the present disclosure with reference to the accompanying drawings, the above contents and other objectives, features, and advantages of the present disclosure will become clearer. In the accompanying drawings:
FIG. 1 schematically shows a flowchart of an imaging positioning method according to an embodiment of the present disclosure;
FIG. 2 schematically shows a flowchart of operation S120 in the imaging positioning method according to an embodiment of the present disclosure;
FIG. 3 schematically shows operation S200 of generating a second image information of an object in the imaging positioning method according to an embodiment of the present disclosure;
FIG. 4 schematically shows a flowchart of operation S150 in the imaging positioning method according to an embodiment of the present disclosure;
FIG. 5 schematically shows operation S300 of determining a current coordinate information in the imaging positioning method according to an embodiment of the present disclosure;
FIG. 6 schematically shows a flowchart of operation S160 in the imaging positioning method according to an embodiment of the present disclosure;
FIG. 7 schematically shows operation S400 of moving an object from a first imaging beam plane to a second imaging beam plane in the imaging positioning method according to an embodiment of the present disclosure;
FIG. 8 schematically shows a flowchart of operation S160 in the imaging positioning method according to another embodiment of the present disclosure;
FIG. 9 schematically shows operation S500 of the imaging positioning method according to an embodiment of the present disclosure, which is performed after moving an object by a calculated distance from the first imaging beam plane;
FIG. 10 schematically shows operation S600 of the imaging positioning method according to an embodiment of the present disclosure, which is performed when it is determined that a conveying distance deviation in a conveying direction has occurred in a conveying system;
FIG. 11 schematically shows a flowchart of driving a driving roller to rotate in the imaging positioning method according to an embodiment of the present disclosure;
FIG. 12 schematically shows a flowchart of determining whether a conveying distance deviation has occurred in the imaging positioning method according to an embodiment of the present disclosure;
FIG. 13 schematically shows a flowchart of operation S840 in the imaging positioning method according to an embodiment of the present disclosure;
FIG. 14 schematically shows operation S900 of the imaging positioning method according to an embodiment of the present disclosure, which is performed when it is determined that a conveying distance deviation of a conveyor belt has occurred;
FIG. 15 schematically shows a structural diagram of an imaging inspection system according to an embodiment of the present disclosure;
FIG. 16 schematically shows a structural diagram of a conveying system of the imaging inspection system according to an embodiment of the present disclosure; and
FIG. 17 schematically shows a block diagram of an electronic device suitable for implementing part of the operations of the imaging positioning method according to an embodiment of the present disclosure.

### DETAILED DESCRIPTION OF EMBODIMENTS

Embodiments of the present disclosure will be described below with reference to the accompanying drawings. However, it should be understood that these descriptions are merely illustrative and are not intended to limit the scope of the present disclosure. In the following detailed description, for ease of interpretation, numerous specific details are set forth to provide comprehensive understanding of embodiments of the present disclosure. However, it is clear that one or more embodiments may also be implemented without these specific details. In addition, in the following description, descriptions of well-known structures and technologies are omitted to avoid unnecessarily obscuring concepts of the present disclosure.

Terms are used herein for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

All terms used herein (including technical and scientific terms) have the meanings generally understood by those skilled in the art, unless otherwise defined. It should be noted that the terms used herein shall be interpreted to have meanings consistent with the context of the specification, and shall not be interpreted in an idealized or overly rigid manner.

In a case of using the expression similar to "at least one of A, B and C", it should be explained according to the meaning of the expression generally understood by those skilled in the art (for example, "a system including at least one of A, B and C" should include but not be limited to a system including A alone, a system including B alone, a system including C alone, a system including A and B, a system including A and C, a system including B and C, and/or a system including A, B and C).

In the technical solutions of the present disclosure, the acquisition, storage and application of user personal information and item information comply with the provisions of relevant laws and regulations, adopt necessary confidentiality measures, and do not violate public order and good customs.

In related art, X-ray imaging is typically performed on luggage objects, and when a presence of dangerous item (such as explosives, flammable substances, etc.) in an object is determined from the X-ray imaging, the luggage object is manually unpacked and inspected to eliminate potential threats of the luggage object and ensure the safety of public places. In related art, after a first inspection is performed on the object, if a suspicious dangerous item is detected, it is possible, for example, to perform a second or more inspections for the position of the suspicious dangerous item to determine whether a dangerous item is truly present at the position of the suspicious dangerous item. However, when the object is inspected for the second or more times, the position of the suspicious dangerous item detected in the previous inspection cannot be effectively located, thus increasing the difficulty of accurately inspecting the suspicious dangerous item in the subsequent inspection and reducing the inspection efficiency.

To solve the problem in related art that it is difficult to accurately located the position of the suspicious dangerous item detected in a previous inspection in a subsequent inspection, embodiments of the present disclosure provide an imaging positioning method and an imaging inspection system, which may accurately position the suspicious dangerous item detected in the previous inspection and precisely locate the position of the suspicious dangerous item to the imaging beam plane used in the subsequent inspection, thus achieving precise positioning of the suspicious dangerous item and improving the efficiency of security inspection. The imaging positioning method includes but is not limited to: performing a first inspection on an object by a first inspection system to generate a first inspection information; determining at least one suspect position of the object according to the first inspection information; conveying the object to a second inspection system by a conveying system, where the second inspection system is used to generate a first imaging beam plane and a second imaging beam plane for inspecting the object, and a predetermined distance is provided between the first imaging beam plane and the second imaging beam plane; locating the object on the first imaging beam plane, and performing a second inspection on the object by the second inspection system to generate a second inspection information; determining at least one target position of the object according to the first inspection information and the second inspection information, where the target position is associated with the suspect position; controlling the conveying system to move the object from the first imaging beam plane to the second imaging beam plane according to the predetermined distance and a current coordinate information of the at least one target position, so that the at least one target position of the object is located on the second imaging beam plane, so as to perform a third inspection on the object by the second inspection system using the second imaging beam plane, where the current coordinate information is a coordinate information of the at least one target position after the second inspection is completed and before the conveying system moves the object from the first imaging beam plane to the second imaging beam plane.

According to embodiments of the present disclosure, by performing multiple inspections on the object using the first inspection system and the second inspection system, the accuracy of object inspection may be effectively improved. At least one suspect position of the object may be determined according to the first inspection information, the target position of the object associated with the suspect position may be determined according to the first inspection information and the second inspection information, and the conveying system may then move the object to the second imaging beam plane according to the current coordinate information of the target position and the predetermined distance, so that the imaging positioning accuracy of the target position of the object associated with the suspect position may be improved, the positioning time of the object on the second imaging beam plane may be shortened, and the inspection efficiency may be effectively improved.

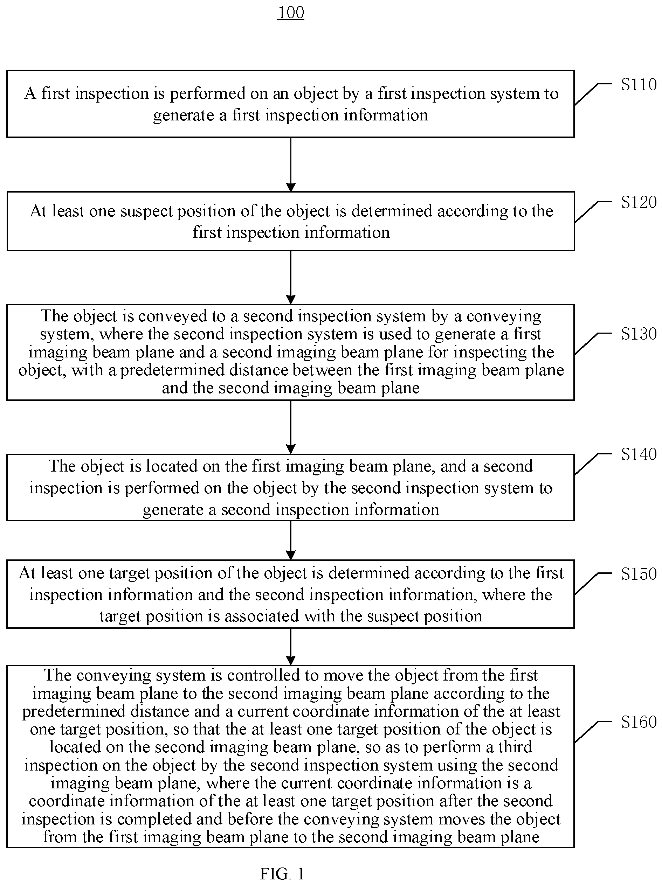

The imaging positioning method of the present disclosure will be described in detail below with reference to FIG. 1 to FIG. 14.

FIG. 1 schematically shows a flowchart of an imaging positioning method according to an embodiment of the present disclosure.

As shown in FIG. 1, an imaging positioning method 100 according to an embodiment of the present disclosure may include operation S110 to operation S160.

In operation S110, a first inspection is performed on an object by a first inspection system to generate a first inspection information.

The object may be, for example, luggage, documents, food, etc., carried by relevant personnel (such as passengers, pedestrians, etc.). it is possible to perform security check or inspection on the objects using a plurality of inspection systems to determine whether the object contains any information such as components that fail to meet relevant requirements.

Exemplarily, the first inspection system includes, for example, a CT (Computed Tomography) inspection device or a DR (Digital Radiography) inspection device.

The first inspection information may be, for example, X-ray transmission information. Other security inspection information of the object, such as image and composition information of the object, may be obtained according to the first inspection information.

Exemplarily, the first inspection may be a first category of inspection for the object, such as X-ray transmission inspection.

In an optional embodiment, operation S110 may be performed on the object multiple times to effectively improve the accuracy of security inspection. For example, operation S110 may be performed again after other subsequent operations. The number of times operation S110 is performed on the object is not limited in the embodiments of the present disclosure.

In operation S120, at least one suspect position of the object is determined according to the first inspection information.

Exemplarily, the suspect position may be a position on the inspected object that is determined to possibly contain components that fail to meet relevant requirements after the inspection of the first inspection system. For example, if the object is a travel bag and a position in the travel bag contains a dangerous object, the position of the dangerous object in the travel bag is determined as the suspect position. If there are multiple dangerous objects in the travel bag, each position of the dangerous objects may be determined as a suspect position.

In other optional embodiments, the suspect position may refer to a position where it is difficult to determine whether the object at that position meets relevant requirements. For example, if a particular position in the travel bag contains an object that cannot be identified, that position may be a suspect position.

In some embodiments of the present disclosure, the suspect position may be determined manually based on the first inspection information. In other embodiments of the present disclosure, the suspect position may be automatically marked by a machine based on the first inspection information, for example, the first inspection information may be marked by a neural network to determine the suspect position of the object.

In operation S130, the object is conveyed to a second inspection system by a conveying system. The second inspection system is used to generate a first imaging beam plane and a second imaging beam plane for inspecting the object, with a predetermined distance between the first imaging beam plane and the second imaging beam plane.

Exemplarily, the conveying system may be a transmission device including components such as a conveyor belt, rollers, and a driving motor. The conveying system may include multiple such units and is capable of conveying or moving the object from a first position to a second position different from the first position.

Exemplarily, the second inspection system includes, for example, a DR (Digital Radiography) inspection device for generating the first imaging beam plane and an XRD (X-Ray Diffraction) inspection device for generating the second imaging beam plane.

Exemplarily, the first imaging beam plane may be a beam plane used for performing a second inspection on the object, and the second imaging beam plane may be a beam plane used for performing a third inspection on the object. The predetermined distance between the first imaging beam plane and the second imaging beam plane may be adaptively adjusted manually or by a machine to meet the usage requirements of different environments.

**In** an optional embodiment, the predetermined distance between the first imaging beam plane and the second imaging beam plane is greater than a maximum size of the object.

Exemplarily, the second inspection may be a second category of inspection for the object, such as X-ray transmission inspection.

For example, the second inspection is performed on the object using the first imaging beam plane of the second inspection system to mark at least one suspect position of the object, which facilitates the inspection of the suspect position on the second imaging beam plane.

In operation S140, the object is located on the first imaging beam plane, and a second inspection is performed on the object by the second inspection system to generate a second inspection information.

Exemplarily, the object may be moved from the first inspection system to the first imaging beam plane of the second inspection system by the conveying system. When the object reaches the second imaging beam plane, the device in the second inspection system for performing the second inspection on the object starts to inspect the object and generate a second inspection information.

For example, the second inspection information may include X-ray transmission information. Other security inspection information of the object, such as image and shape information of the object, may be obtained according to the second inspection information.

In an optional embodiment, the first inspection information may be identical with the second inspection information. In other optional embodiments, the first inspection information may be partially identical with the second inspection information.

Exemplarily, the first inspection information is partially identical with the second inspection information. The second inspection information may be used to further determine the suspicious substance at the suspect position in the first inspection information, that is, to perform further determination for the position that cannot be determined or is suspicious in the first inspection information, so as to effectively check whether there are substances or components that fail to meet relevant requirements at the position that cannot be determined or is suspicious in the first inspection. This may avoid moving the object with undetermined or suspect positions to the manual inspection area for manual examination, thus effectively improving the efficiency of security inspection.

In operation S150, at least one target position of the object is determined according to the first inspection information and the second inspection information, where the target position is associated with the suspect position.

Exemplarily, the target position may be a position associated with the suspect position determined during the second inspection. The target position may be identical with the suspect position, or it may lie within a certain range including the suspect position. In an optional embodiment, the number of target positions may be the same as the number of suspect positions.

For example, it is possible to compare the first inspection information and the second inspection information, and associate the at least one suspect position of the object determined according to the first inspection information with the position in the second inspection information according to a comparison result of the first inspection information and the second inspection information, so as to determine the target position of the object. The target position is used to perform a third inspection on the object on the second imaging beam plane so as to determine whether the target position contains any information that fails to meet the requirements.

In operation S160, the conveying system is controlled to move the object from the first imaging beam plane to the second imaging beam plane according to the predetermined distance and a current coordinate information of the at least one target position, so that the at least one target position of the object is located on the second imaging beam plane, so as to perform a third inspection on the object by the second inspection system using the second imaging beam plane. The current coordinate information is a coordinate information of the at least one target position after the second inspection is completed and before the conveying system moves the object from the first imaging beam plane to the second imaging beam plane.

Exemplarily, the conveying system is controlled to move the object from the first imaging beam plane to the second imaging beam plane so that the at least one target position of the object is located on the second imaging beam plane to perform a third inspection on the target position of the object and determine whether the target position contains any information that fails to meet the requirements, such as whether the target position contains dangerous components.

In some exemplary embodiments of the present disclosure, each target position has a current coordinate information, and the conveying system may be controlled to move the object according to the current coordinate information of each target position, so as to accurately locate each target position on the second imaging beam plane, facilitating the second inspection system to perform a third inspection on each target position of the object, thereby determining whether the target position contains any information that fails to meet the requirements, such as dangerous components.

In some exemplary embodiments of the present disclosure, the current coordinate information is the coordinate information of the at least one target position after the second inspection is completed and before the conveying system moves the object from the first imaging beam plane to the second imaging beam plane. For example, after the object passes through the first imaging beam plane, a second inspection information of the object is generated. At that point, different positions on the object correspond to different positions on the first imaging beam plane and have different current coordinate information. By determining each target position associated with the suspect position and determining the current coordinate information of each target position, the conveying system may be controlled to sequentially locate the target positions of the object on the second imaging beam plane according to the current coordinate information and the predetermined distance between the first imaging beam plane and the second imaging beam plane, so that the second inspection system may perform a third inspection on the target positions on the second imaging beam plane, thereby reducing the difficulty of locating the target positions and improving the efficiency of security inspection.

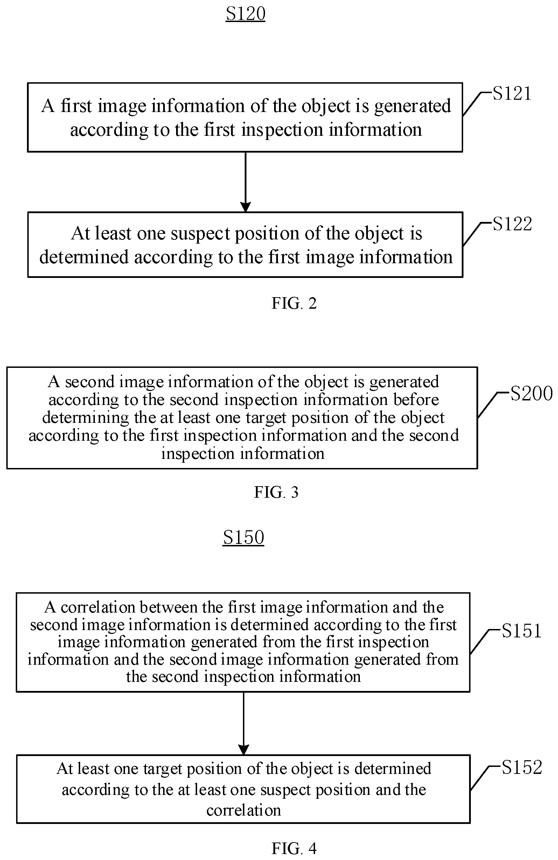

FIG. 2 schematically shows a flowchart of operation S120 in the imaging positioning method according to an embodiment of the present disclosure.

As shown in FIG. 2, operation S120 includes operation S 121 to operation S122.

In operation S121, a first image information of the object is generated according to the first inspection information.

Exemplarily, the first inspection information includes X-ray transmission data. For example, the first image information of the object may be generated according to the X-ray transmission data, and the first image information may be an X-ray transmission image.

In operation S122, at least one suspect position of the object is determined according to the first image information.

The suspect position may be a position where the object contains information that fails to meet the requirements. For example, the suspect position of the object may be determined manually according to the first image information, or determined by a neural network, etc., according to the first image information.

In embodiments of the present disclosure, by determining at least one suspect position of the object, it is possible to perform further inspection and determination on the suspect position during the second inspection or third inspection, thereby improving the accuracy of security inspection. Furthermore, the second inspection and the third inspection may be performed simply for the suspect position, and other positions do not need to be detected, which may effectively improve the efficiency of security inspection.

FIG. 3 schematically shows operation S200 of generating a second image information of an object in the imaging positioning method according to an embodiment of the present disclosure.

As shown in FIG. 3, the imaging positioning method according to the embodiment of the present disclosure further includes operation S200.

In operation S200, a second image information of the object is generated according to the second inspection information before determining the at least one target position of the object according to the first inspection information and the second inspection information.

Exemplarily, after the object is located on the first imaging beam plane of the second inspection system, a second inspection may be performed on the object to generate a second inspection information. Exemplarily, the second inspection information may include X-ray transmission information, and a second image information of the object may be generated according to the second inspection information.

According to some embodiments of the present disclosure, the second image information may be compared with the first image information, so as to rapidly determine the target position of the object in the second image information associated with the suspect position.

In some exemplary embodiments, when the conveying system conveys the object from the first inspection system to the second inspection system, the object may rotate, flip, etc., during the conveying process, resulting in a change in the suspect position of the object determined according to the first inspection information. By generating the second image information of the object according to the second inspection information, it is convenient to compare and associate the first image information with the second image information, so as to determine the target position in the second image information associated with the suspect position.

FIG. 4 schematically shows a flowchart of operation S150 in the imaging positioning method according to an embodiment of the present disclosure.

As shown in FIG. 4, a process of operation S150 includes operation S151 to operation S152.

In operation S151, a correlation between the first image information and the second image information is determined according to the first image information generated from the first inspection information and the second image information generated from the second inspection information.

In some embodiments of the present disclosure, the first image information generated according to the first inspection information may be used to determine a placement orientation of the object when the object passes through the first inspection system and a specific situation inside the object. For example, if the object is a travel bag, it is possible to determine the placement orientation of the travel bag and the situation inside the travel bag according to the first image information of the travel bag. Similarly, the second image generated according to the second inspection information may be used to determine the placement orientation of the object when the object passes through the first imaging beam plane of the second inspection system, the specific situation inside the object, etc.

When the placement orientation of the object on the first imaging beam plane of the second inspection system changes relative to the placement orientation of the object in the first inspection system, the correlation between the first image information and the second image information may be determined according to the first image information and the second image information. For example, if the object rotates when moving from the first inspection system to the first imaging beam plane of the second inspection system, it is possible to determine a rotation angle of the object according to the first image information and the second image information, so as to further determine the correlation between the positions in the first image information and in the second image information.

In operation S152, at least one target position of the object is determined according to the at least one suspect position and the correlation.

In some embodiments of the present disclosure, the suspect position is located, for example, in the first image information, and the associated positions in the first image information and in the second image information may be determined according to the correlation between the first image information and the second image information.

For example, according to a first suspect position in the first image information, a first target position in the second image information associated with the first suspect position may be determined. When the first image information contains a plurality of suspect positions, a plurality of target positions may be determined from the second image information.

According to embodiments of the present disclosure, by determining the target position based on the suspect position and the correlation, it is possible to accurately determine the target position associated with the suspect position even if the object is flipped during transportation by the conveying system, thereby improving the accuracy of locating the target position of the object on the second imaging beam plane for the third inspection, and improving the efficiency and accuracy of security inspection.

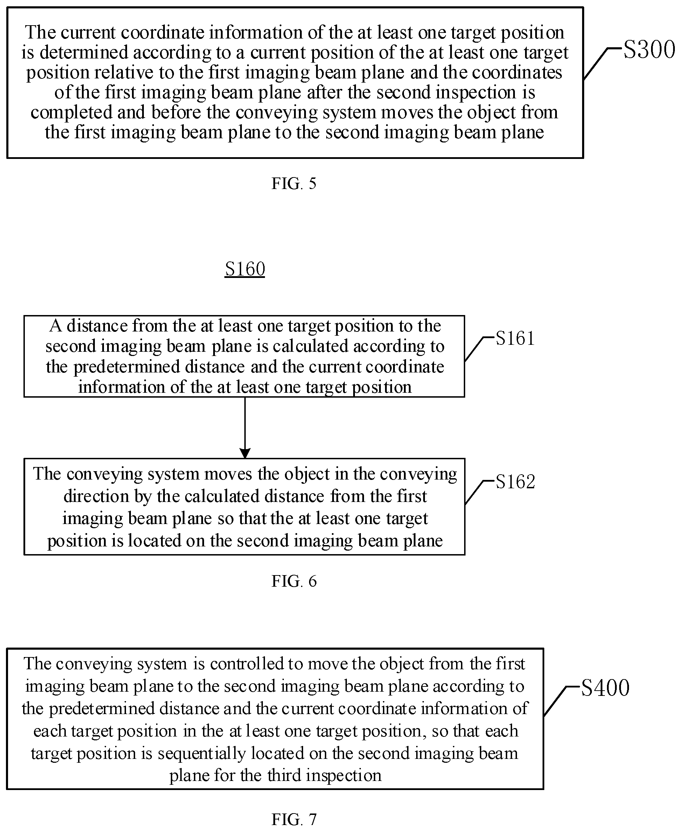

FIG. 5 schematically shows operation S300 of determining a current coordinate information in the imaging positioning method according to an embodiment of the present disclosure.

As shown in FIG. 5, the imaging positioning method according to the embodiment of the present disclosure further includes operation S300.

In operation S300, the current coordinate information of the at least one target position is determined according to a current position of the at least one target position relative to the first imaging beam plane and the coordinates of the first imaging beam plane after the second inspection is completed and before the conveying system moves the object from the first imaging beam plane to the second imaging beam plane.

In some exemplary embodiments of the present disclosure, the first imaging beam plane has corresponding coordinates. After the second inspection of the object is completed, the object has completely passed through the first imaging beam plane, and different positions on the object have different spatial relationships with the first imaging beam plane. For example, an orientation of the target position in the second image information may be determined from the second image information, and the current coordinate information of each target position may be determined according to the current position of each target position relative to the first imaging beam plane and the coordinates of the first imaging beam plane. The current coordinate information may characterize a relationship between the target position of the object and the first imaging beam plane.

FIG. 6 schematically shows a flowchart of operation S160 in the imaging positioning method according to an embodiment of the present disclosure.

As shown in FIG. 6, a process of operation S160 includes operation S161 to operation S162.

In operation S161, a distance from the at least one target position to the second imaging beam plane is calculated according to the predetermined distance and the current coordinate information of the at least one target position.

In some exemplary embodiments of the present disclosure, the distance from the target position to the second imaging beam plane is smaller than the predetermined distance, that is, the target position lies between the first imaging beam plane and the second imaging beam plane.

In operation S162, the conveying system moves the object in the conveying direction by the calculated distance from the first imaging beam plane so that the at least one target position is located on the second imaging beam plane.

Exemplarily, by calculating the distance between the target position and the second imaging beam plane, it is convenient to control the conveying system to move the object such that the target position is located on the second imaging beam plane to enable a third inspection for the target position of the object, which effectively shortens the time required to locate the target position and improve the efficiency of security inspection.

FIG. 7 schematically shows operation S400 of moving an object from a first imaging beam plane to a second imaging beam plane in the imaging positioning method according to an embodiment of the present disclosure.

As shown in FIG. 7, the imaging positioning method according to the embodiment of the present disclosure further includes operation S400.

In operation S400, the conveying system is controlled to move the object from the first imaging beam plane to the second imaging beam plane according to the predetermined distance and the current coordinate information of each target position in the at least one target position, so that each target position is sequentially located on the second imaging beam plane for the third inspection.

Exemplarily, there may be a plurality of target positions, each of which is associated with a suspect position. The third inspection is performed for each target position. If a result of the third inspection shows that a detected target position does not contain any information that fails to meet the requirements, the inspection proceeds to a next target position. Thus, by sequentially locating each target position on the second imaging beam plane, the third inspection may be performed for a plurality of target positions to determine whether any of the target positions contains information that fails to meet the requirements.

For example, if one target position of the inspected object contains information that fails to meet the requirements, the third inspection of other target positions of the object may be terminated, and the object is immediately transferred to the manual inspection area for manual examination, thereby effectively improving the efficiency of security inspection.

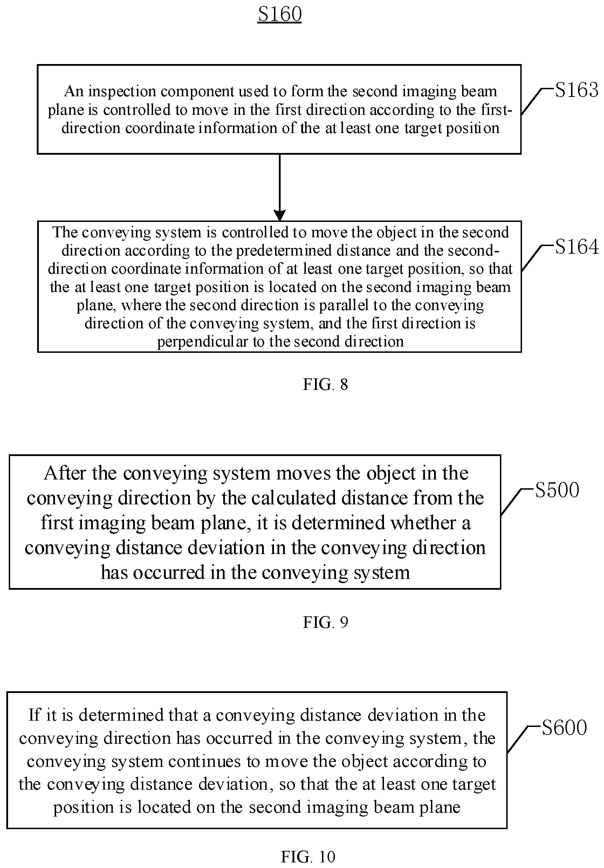

FIG. 8 schematically shows a flowchart of operation S160 in the imaging positioning method according to another embodiment of the present disclosure.

In some exemplary embodiments of the present disclosure, the coordinate information includes a first-direction coordinate information and a second-direction coordinate information.

Exemplarily, the first direction is perpendicular to the conveying direction of the conveying system, and the second direction is parallel to the conveying direction of the conveying system, that is, the first direction is perpendicular to the second direction.

As shown in FIG. 8, a process of operation S160 further includes operation S 163 to operation S164.

In operation S163, an inspection component used to form the second imaging beam plane is controlled to move in the first direction according to the first-direction coordinate information of the at least one target position.

In some exemplary embodiments, the inspection component used to form the second imaging beam plane may move in the first direction on the second imaging beam plane. By controlling the movement of the inspection component in the first direction on the second imaging beam plane, different target positions of the object may be inspected.

Exemplarily, when the target position lies on the imaging beam plane, the coordinate information of the target position in the first direction varies. By controlling the movement of the inspection component in the first direction, the target position located on the second imaging beam plane, which has different first-direction coordinates, may be inspected.

In operation S164, the conveying system is controlled to move the object in the second direction according to the predetermined distance and the second-direction coordinate information of at least one target position, so that the at least one target position is located on the second imaging beam plane. The second direction is parallel to the conveying direction of the conveying system, and the first direction is perpendicular to the second direction.

Exemplarily, by controlling the conveying system to move the object in the second direction, the target position on the object may be located on the second imaging beam plane, allowing the inspection component to perform a third inspection on the target position.

In embodiments of the present disclosure, operation S163 and operation S164 may be performed in a reverse order or performed simultaneously, which may both achieve the beneficial effects of the present disclosure. The present disclosure does not impose any limitation to the order in which operation S163 and operation S164 are performed.

FIG. 9 schematically shows operation S500 of the imaging positioning method according to an embodiment of the present disclosure, which is performed after moving an object by a calculated distance from the first imaging beam plane.

As shown in FIG. 9, the imaging positioning method according to the embodiment of the present disclosure further includes operation S500.

In operation S500, after the conveying system moves the object in the conveying direction by the calculated distance from the first imaging beam plane, it is determined whether a conveying distance deviation in the conveying direction has occurred in the conveying system.

In some embodiments of the present disclosure, when conveying the object, the conveying system may introduce some conveying distance deviation, which causes the target position of the object failing to be located on the second imaging beam plane of the second inspection system. By determining whether a conveying distance deviation in the conveying direction has occurred in the conveying system, it may be determined whether the third inspection is actually performed for the determined suspect position, thereby improving the accuracy of the result of the third inspection and effectively improving the efficiency of security inspection.

Exemplarily, if it is determined that a conveying distance deviation in the conveying direction has occurred in the conveying system, it indicates that the conveying system has a fault and needs to be adjusted. Thus, the result of the third inspection performed on the target position of the object may be unreliable. In such cases, for example, the inspection may be re-performed on the target position of the object to improve the accuracy of the inspection.

FIG. 10 schematically shows operation S600 of the imaging positioning method according to an embodiment of the present disclosure, which is performed when it is determined that a conveying distance deviation in a conveying direction has occurred in a conveying system.

As shown in FIG. 10, the imaging positioning method according to the embodiment of the present disclosure further includes operation S600.

In operation S600, if it is determined that a conveying distance deviation in the conveying direction has occurred in the conveying system, the conveying system continues to move the object according to the conveying distance deviation, so that the at least one target position is located on the second imaging beam plane.

In some embodiments of the present disclosure, in a case of a conveying distance deviation in the conveying direction, the conveying system may continue to move the object according to the conveying distance deviation, for example, to adjust a moving distance of the object in the conveying direction or in an opposite direction, so that the at least one target position is located on the second imaging beam plane, and the third inspection is performed on the target position of the object, thereby improving the accuracy of the result of the third inspection.

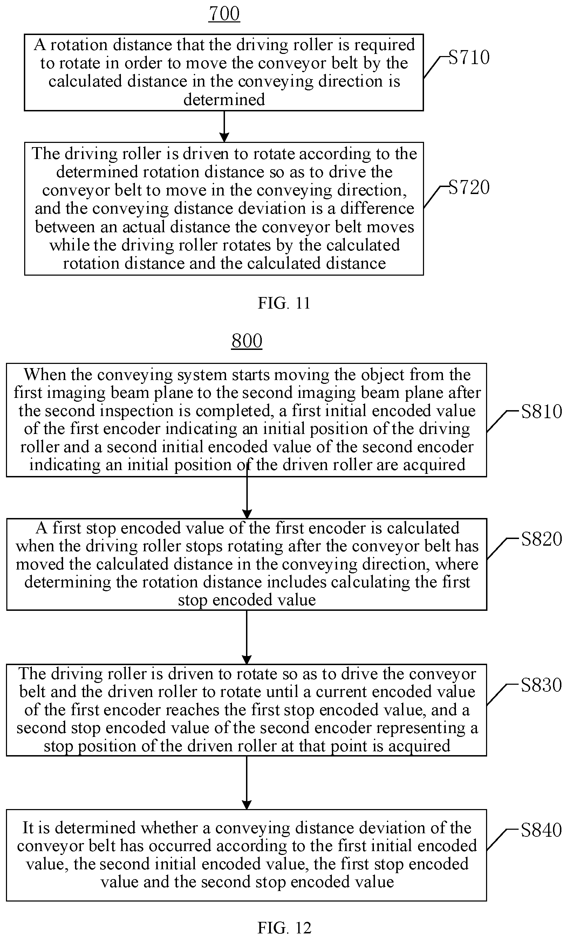

FIG. 11 schematically shows a flowchart of driving a driving roller to rotate in the imaging positioning method according to an embodiment of the present disclosure.

In some exemplary embodiments of the present disclosure, the conveying system includes a conveyor belt for conveying the object, an driving roller for driving the conveyor belt to rotate, and a driven roller arranged downstream of the driving roller in the conveying direction and in frictional engagement with the conveyor belt.

As shown in FIG. 11, the imaging positioning method according to the embodiment of the present disclosure further includes a process 700, which includes operation S710 to operation S720.

In operation S710, a rotation distance that the driving roller is required to rotate in order to move the conveyor belt by the calculated distance in the conveying direction is determined.

In operation S720, the driving roller is driven to rotate according to the determined rotation distance so as to drive the conveyor belt to move in the conveying direction, and the conveying distance deviation is a difference between an actual distance the conveyor belt moves while the driving roller rotates by the calculated rotation distance and the calculated distance.

In an embodiment of the present disclosure, the calculated distance that the conveyor belt is moved in the conveying direction is a calculated distance by which the target position of the object is moved in the conveying direction by the conveying system from the current position to the second imaging beam plane.

Exemplarily, if the actual distance the conveyor belt moves while the driving roller rotates by the calculated rotation distance is equal to the calculated distance, there is no distance deviation; if not, a distance deviation is present.

FIG. 12 schematically shows a flowchart of determining whether a conveying distance deviation has occurred in the imaging positioning method according to an embodiment of the present disclosure.

In some exemplary embodiments of the present disclosure, the conveying system further includes a first encoder and a second encoder. The first encoder is disposed at the driving roller or at a motor for driving the driving roller to rotate so as to generate an encoded value corresponding to a rotation position of the driving roller or the motor. The second encoder is disposed at the driven roller to generate an encoded value corresponding to a rotation position of the driven roller.

In some embodiments, the first encoder may be disposed at the driving roller, and the second encoder may be disposed at the driven roller. In other optional embodiments, the first encoder may be disposed at the motor used for driving the driving roller to rotate, and the second encoder is disposed at the driven roller, with no rotation difference between the motor and the driving roller.

As shown in FIG. 12, the imaging positioning method according to the embodiment of the present disclosure further includes a process 800. The process 800 includes operation S810 to operation S840.

In operation S810, when the conveying system starts moving the object from the first imaging beam plane to the second imaging beam plane after the second inspection is completed, a first initial encoded value of the first encoder indicating an initial position of the driving roller and a second initial encoded value of the second encoder indicating an initial position of the driven roller are acquired.

Exemplarily, after the second inspection is completed, the distance from the target position of the object to the second imaging beam plane is determined. At this time, it is possible to acquire the first initial encoded value of the first encoder and the second initial encoded value of the second encoder.

In operation S820, a first stop encoded value of the first encoder is calculated when the driving roller stops rotating after the conveyor belt has moved the calculated distance in the conveying direction, where determining the rotation distance includes calculating the first stop encoded value.

Exemplarily, the rotation distance of the driving roller corresponding to the first initial encoded value and the first stop encoded value is equal to the calculated distance by which the conveyor belt is to be moved in the conveying direction.

In operation S830, the driving roller is driven to rotate so as to drive the conveyor belt and the driven roller to rotate until a current encoded value of the first encoder reaches the first stop encoded value, and a second stop encoded value of the second encoder representing a stop position of the driven roller at that point is acquired.

Exemplarily, the actual rotation distance of the driven roller may be calculated according to the second initial encoded value and the second stop encoded value.

In operation S840, it is determined whether a conveying distance deviation of the conveyor belt has occurred according to the first initial encoded value, the second initial encoded value, the first stop encoded value and the second stop encoded value.

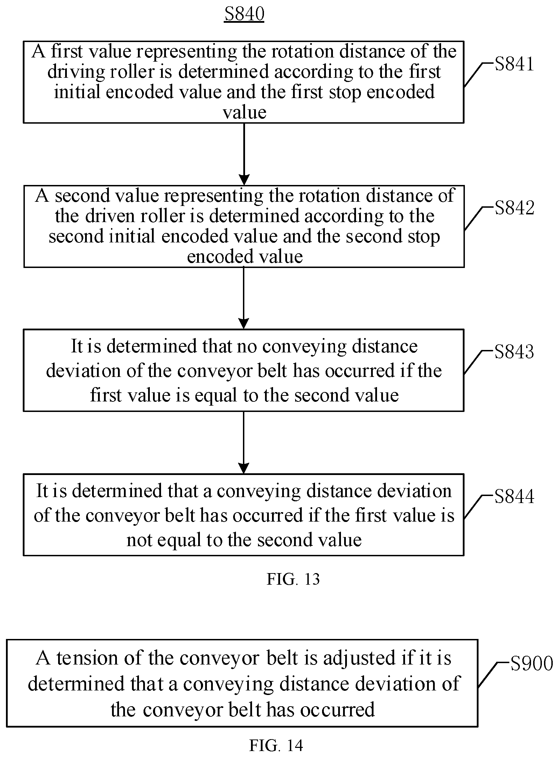

A detailed description of operation S840 will be provided below with reference to FIG. 13.

FIG. 13 schematically shows a flowchart of operation S840 in the imaging positioning method according to an embodiment of the present disclosure.

As shown in FIG. 13, operation S840 includes operation S841 to operation S844.

In operation S841, a first value representing the rotation distance of the driving roller is determined according to the first initial encoded value and the first stop encoded value.

In operation S842, a second value representing the rotation distance of the driven roller is determined according to the second initial encoded value and the second stop encoded value.

In operation S843, it is determined that no conveying distance deviation of the conveyor belt has occurred if the first value is equal to the second value.

In operation S844, it is determined that a conveying distance deviation of the conveyor belt has occurred if the first value is not equal to the second value.

For example, if the first value is equal to the second value, it indicates that no relative movement has occurred between the driving roller, the driven roller, and the conveyor belt, that is, no conveying distance deviation has occurred during transportation of the object on the conveyor belt.

For another example, if the first value is not equal to the second value, it indicates that a relative movement has occurred between the driving roller, the driven roller, and the conveyor belt, that is, a conveying distance deviation has occurred during transportation of the object on the conveyor belt.

FIG. 14 schematically shows operation S900 of the imaging positioning method according to an embodiment of the present disclosure, which is performed when it is determined that a conveying distance deviation of a conveyor belt has occurred.

As shown in FIG. 14, the imaging positioning method according to the embodiment of the present disclosure further includes operation S900.

In operation S900, a tension of the conveyor belt is adjusted if it is determined that a conveying distance deviation of the conveyor belt has occurred.

In some exemplary embodiments of the present disclosure, the tension of the conveyor belt may be adjusted manually by an operator or automatically by a tensioning device.

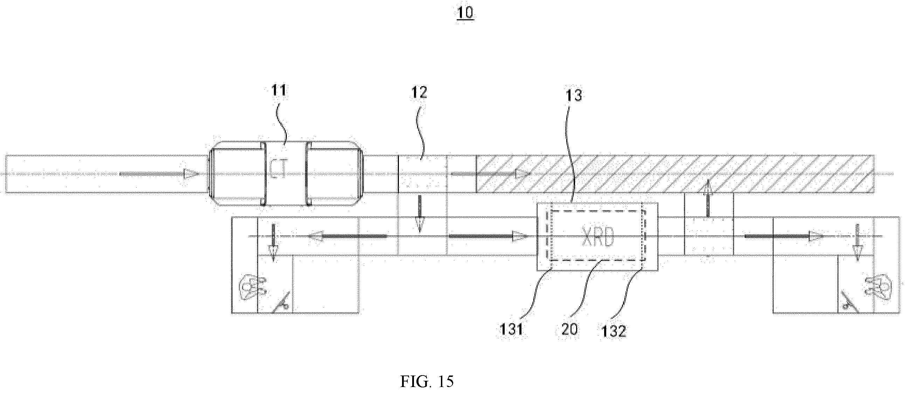

FIG. 15 schematically shows a structural diagram of an imaging inspection system according to an embodiment of the present disclosure.

As shown in FIG. 15, an imaging inspection system 10 may include a first inspection system 11, a processor 12, a conveying system 20, and a second inspection system 13. The second inspection system 13 includes a first imaging beam plane 131 and a second imaging beam plane 132. The processor 12 may be disposed at any required position of the imaging inspection system 10 to implement the functions of the processor.

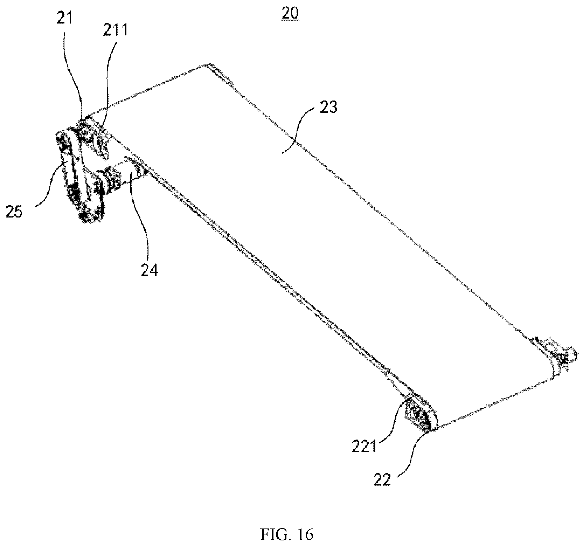

FIG. 16 schematically shows a structural diagram of a conveying system of the imaging inspection system according to an embodiment of the present disclosure.

As shown in FIG. 16, the conveying system 20 includes a driving roller 21, a driven roller 22, a conveyor belt 23, a motor 24, a transmission belt 25, a first encoder 211, and a second encoder 221.

The imaging inspection system according to the embodiment of the present disclosure will be described in detail below with reference to FIG. 15 and FIG. 16.

As shown in FIG. 15, the imaging positioning system 10 includes a first inspection system 11, a second inspection system 13, a conveying system 20, and a processor 12. The first inspection system 11 is used to perform a first inspection on an object to generate a first inspection information. The conveying system 20 is used to convey the object from the first inspection system to the second inspection system. The second inspection system 13 is used to generate a first imaging beam plane and a second imaging beam plane for inspecting the object conveyed by the conveying system, so as to perform a second inspection on the object to generate a second inspection information when the object is located on the first imaging beam plane. A predetermined distance is provided between the first imaging beam plane and the second imaging beam plane. The processor 12 is used to: determine at least one suspect position of the object according to the first inspection information; determine at least one target position of the object according to the first inspection information and the second inspection information, where the target position is associated with the suspect position; and control the conveying system to move the object from the first imaging beam plane to the second imaging beam plane according to the predetermined distance and a current coordinate information of the at least one target position, so that the at least one target position of the object is located on the second imaging beam plane. The second inspection system is further used to perform a third inspection on the object when the at least one target position of the object is located on the second imaging beam plane. The current coordinate information is the coordinate information of the at least one target position after the second inspection is completed and before the conveying system moves the object from the first imaging beam plane to the second imaging beam plane.

In some embodiments of the present disclosure, the processor 12 is used to: generate a first image information of the object according to the first inspection information; and determine the at least one suspect position of the object according to the first image information.

In some embodiments of the present disclosure, the processor 12 is used to generate a second image information of the object according to the second inspection information before determining the at least one target position of the object according to the first inspection information and the second inspection information.

In some embodiments of the present disclosure, the processor 12 is used to: determine a correlation between the first image information and the second image information according to the first image information generated from the first inspection information and the second image information generated from the second inspection information according to the first image information and the second image information; and determine at least one target position of the object according to the at least one suspect position and the correlation.

In some embodiments of the present disclosure, the processor 12 is used to determine the current coordinate information of the at least one target position according to a current position of the at least one target position relative to the first imaging beam plane and the coordinates of the first imaging beam plane after the second inspection is completed and before the conveying system moves the object from the first imaging beam plane to the second imaging beam plane.

In some embodiments of the present disclosure, the processor 12 is further used to: calculate a distance from the at least one target position to the second imaging beam plane according to the predetermined distance and the current coordinate information of the at least one target position; and move the object in the conveying direction by the calculated distance from the first imaging beam plane by the conveying system such that the at least one target position is located on the second imaging beam plane.

In some embodiments of the present disclosure, the at least one target position includes one or more target positions, and the processor 12 is used to control the conveying system to move the object from the first imaging beam plane to the second imaging beam plane according to the predetermined distance and the current coordinate information of each target position in the at least one target position, so that each target position is sequentially located on the second imaging beam plane for the third inspection.

In some embodiments of the present disclosure, the coordinate information includes a first-direction coordinate information and a second-direction coordinate information. The processor 12 is used to: control an inspection component used for forming the second imaging beam plane to move in the first direction according to the first-direction coordinate information of the at least one target position, and control the conveying system to move the object in the second direction according to the predetermined distance and the second-direction coordinate information of the at least one target position, so that the at least one target position is located on the second imaging beam plane. The second direction is parallel to the conveying direction of the conveying system, and the first direction is perpendicular to the second direction.

In some embodiments of the present disclosure, the processor 12 is used to determine whether a conveying distance deviation in the conveying direction has occurred in the conveying system after the conveying system moves the object in the conveying direction by the calculated distance from the first imaging beam plane.

In some embodiments of the present disclosure, the processor 12 is used to, when it is determined that a conveying distance deviation in the conveying direction has occurred in the conveying system, continue to move the object by the conveying system according to the conveying distance deviation so that the at least one target position is located on the second imaging beam plane.

In some embodiments of the present disclosure, as shown in FIG. 16, the conveying system 20 includes a conveyor belt 23 for conveying the object, a driving roller 21 for driving the conveyor belt to rotate, and a driven roller 22 arranged downstream of the driving roller in the conveying direction and in frictional engagement with the conveyor belt. The processor 12 is further used to: determine a rotation distance that the driving roller is required to rotate in order to move the conveyor belt by the calculated distance in the conveying direction; and drive the driving roller to rotate according to the determined rotation distance so as to drive the conveyor belt to move in the conveying direction, where the conveying distance deviation is a difference between an actual distance the conveyor belt moves while the driving roller rotates by the calculated rotation distance and the calculated distance.

In some embodiments of the present disclosure, the conveying system further includes a first encoder and a second encoder. The first encoder is disposed at the driving roller or at a motor that drives the driving roller to rotate, so as to generate an encoded value corresponding to a rotation position of the driving roller or the motor. The second encoder is disposed at the driven roller, so as to generate an encoded value corresponding to a rotation position of the driven roller. The processor 12 is further used to: acquire a first initial encoded value of the first encoder indicating an initial position of the driving roller and a second initial encoded value of the second encoder indicating an initial position of the driven roller when the conveying system starts moving the object from the first imaging beam plane to the second imaging beam plane after the second inspection is completed; calculate a first stop encoded value of the first encoder when the driving roller stops rotating after the conveyor belt has moved the calculated distance in the conveying direction, where determining the rotation distance includes calculating the first stop encoded value; drive the driving roller to rotate so as to drive the conveyor belt and the driven roller to rotate until a current encoded value of the first encoder reaches the first stop encoded value, and acquire a second stop encoded value of the second encoder indicating a stop position of the driven roller at that point; and determine whether a conveying distance deviation of the conveyor belt has occurred according to the first initial encoded value, the second initial encoded value, the first stop encoded value, and the second stop encoded value.

In some embodiments of the present disclosure, the processor 12 is used to: determine a first value representing the rotation distance of the driving roller according to the first initial encoded value and the first stop encoded value; determine a second value representing the rotation distance of the driven roller according to the second initial encoded value and the second stop encoded value; determine that no conveying distance deviation of the conveyor belt has occurred if the first value is equal to the second value; and determine that a conveying distance deviation of the conveyor belt has occurred if the first value is not equal to the second value.

In some embodiments of the present disclosure, the processor 12 is used to adjust a tension of the conveyor belt if it is determined that a conveying distance deviation of the conveyor belt has occurred.

In some embodiments of the present disclosure, the first inspection system includes a CT or DR inspection device, and the second inspection system includes a DR inspection device for generating the first imaging beam plane and an XRD inspection device for generating the second imaging beam plane.

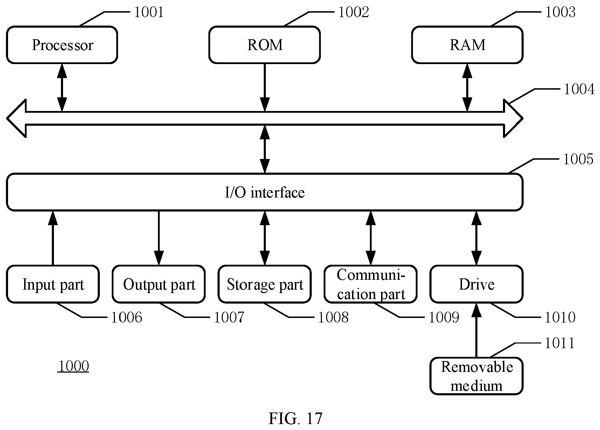

FIG. 17 schematically shows a block diagram of an electronic device suitable for implementing part of the operations of the imaging positioning method according to an embodiment of the present disclosure. The electronic device shown in FIG. 17 is merely an example, and should not bring any limitation to functions and scopes of use of embodiments of the present disclosure.

As shown in FIG. 17, an electronic device 1000 according to embodiments of the present disclosure includes a processor 1001, which may execute various appropriate actions and processing according to the program stored in a read only memory (ROM) 1002 or the program loaded into a random access memory (RAM) 1003 from a storage part 1008. The processor 1001 may, for example, include a general-purpose microprocessor (for example, CPU), an instruction set processor and/or a related chipset and/or a special-purpose microprocessor (for example, an application specific integrated circuit (ASIC)), and the like. The processor 1001 may further include an on-board memory for caching purposes. The processor 1001 may include a single processing unit or multiple processing units for executing some different operations or actions of the method flow according to embodiments of the present disclosure.

Various programs and data required for the operation of the device 1000 are stored in the RAM 1003. The processor 1001, the ROM 1002 and the RAM 1003 are connected to each other through a bus 1004. The processor 1001 executes various operations of the method flow according to embodiments of the present disclosure by executing the programs in the ROM 1002 and/or the RAM 1003. It should be noted that the program may also be stored in one or more memories other than the ROM 1002 and the RAM 1003. The processor 1001 may also execute part of various operations or steps of the method flow according to embodiments of the present disclosure by executing the programs stored in the one or more memories.

According to embodiments of the present disclosure, the electronic device 1000 may further include an input/output (I/O) interface 1005 which is also connected to the bus 1004. The electronic device 1000 may further include one or more of the following components connected to the I/O interface 1005: an input part 1006 including a keyboard, a mouse, etc.; an output part 1007 including a cathode ray tube (CRT), a liquid crystal display (LCD), etc. and a speaker, etc.; a storage part 1008 including a hard disk, etc.; and a communication part 1009 including a network interface card such as a LAN card, a modem, and the like. The communication part 1009 performs communication processing via a network such as the Internet. A drive 1010 is also connected to the I/O interface 1005 as required. A removable medium 1011, such as a magnetic disk, an optical disk, a magneto-optical disk, a semiconductor memory, and the like, is installed on the drive 1010 as required, so that the computer program read therefrom is installed into the storage part 1008 as needed.

The present disclosure further provides a computer-readable storage medium, which may be included in the apparatus/device/system described in the above embodiments; or exist alone without being assembled into the apparatus/device/system. The above-mentioned computer-readable storage medium carries one or more programs that when executed, perform part of the steps or operations of the methods according to embodiments of the present disclosure.

According to embodiments of the present disclosure, the computer-readable storage medium may be a non-transitory computer-readable storage medium, for example, may include but not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above. In the present disclosure, the computer-readable storage medium may be any tangible medium that contains or stores programs that may be used by or in combination with an instruction execution system, apparatus or device. For example, according to embodiments of the present disclosure, the computer-readable storage medium may include the above-mentioned ROM 1002 and/or RAM 1003 and/or one or more memories other than the ROM 1002 and RAM 1003.

Embodiments of the present disclosure further include a computer program product, which contains a computer program. The computer program contains program code for performing part of the steps or operations of the methods shown in the flowcharts. When the computer program product runs on a computer system, the program code causes the computer system to implement part of the steps or operations of the methods provided in embodiments of the present disclosure.

When the computer program is executed by the processor 1001, the above-mentioned functions defined in the system/apparatus of the embodiments of the present disclosure are performed. According to the embodiments of the present disclosure, the above-described systems, apparatuses, modules, units, etc. may be implemented by computer program modules.

In an embodiment, the computer program may rely on a tangible storage medium such as an optical storage device and a magnetic storage device. In another embodiment, the computer program may also be transmitted and distributed in the form of signals on a network medium, downloaded and installed through the communication part 1009, and/or installed from the removable medium 1011. The program code contained in the computer program may be transmitted by any suitable medium, including but not limited to a wireless one, a wired one, or any suitable combination of the above.

In such embodiments, the computer program may be downloaded and installed from the network through the communication part 1009, and/or installed from the removable medium 1011. When the computer program is executed by the processor 1001, the above-mentioned functions defined in the system of embodiments of the present disclosure are performed. According to embodiments of the present disclosure, the above-described systems, apparatuses, devices, modules, units, etc. may be implemented by computer program modules.

According to embodiments of the present disclosure, the program code for executing the computer programs provided by the embodiments of the present disclosure may be written in any combination of one or more programming languages. In particular, these computing programs may be implemented using high-level procedures and/or object-oriented programming languages, and/or assembly/machine languages. Programming languages include, but are not limited to, Java, C++, Python, "C" language or similar programming languages. The program code may be completely executed on the user computing device, partially executed on the user device, partially executed on the remote computing device, or completely executed on the remote computing device or server. In a case of involving a remote computing device, the remote computing device may be connected to a user computing device through any kind of network, including a local area network (LAN) or a wide area networks (WAN), or may be connected to an external computing device (e.g., through the Internet using an Internet service provider).

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

Those skilled in the art may understand that the features described in various embodiments and/or claims of the present disclosure may be combined and/or integrated in various ways, even if such combinations or integrations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

Embodiments of the present disclosure have been described above. However, these embodiments are for illustrative purposes only, and are not intended to limit the scope of the present disclosure. Although the various embodiments have been described separately above, this does not mean that measures in the respective embodiments may not be used in combination advantageously. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. An imaging positioning method, comprising:
performing a first inspection on an object by a first inspection system to generate a first inspection information;
determining at least one suspect position of the object according to the first inspection information;
conveying the object to a second inspection system by a conveying system, wherein the second inspection system is configured to generate a first imaging beam plane and a second imaging beam plane for inspecting the object, and a predetermined distance is provided between the first imaging beam plane and the second imaging beam plane;
locating the object on the first imaging beam plane, and performing a second inspection on the object by the second inspection system to generate a second inspection information;
determining at least one target position of the object according to the first inspection information and the second inspection information, wherein the target position is associated with the suspect position; and
controlling the conveying system to move the object from the first imaging beam plane to the second imaging beam plane according to the predetermined distance and a current coordinate information of the at least one target position, so that the at least one target position of the object is located on the second imaging beam plane, so as to perform a third inspection on the object by the second inspection system using the second imaging beam plane, wherein the current coordinate information is a coordinate information of the at least one target position after the second inspection is completed and before the conveying system moves the object from the first imaging beam plane to the second imaging beam plane.

2. The method according to claim **1,** wherein the determining at least one suspect position of the object according to the first inspection information comprises:
generating a first image information of the object according to the first inspection information; and
determining the at least one suspect position of the object according to the first image information.

3. The method according to claim 2, further comprising: before determining the at least one target position of the object according to the first inspection information and the second inspection information,
generating a second image information of the object according to the second inspection information.

4. The method according to claim 3, wherein the determining at least one target position of the object according to the first inspection information and the second inspection information comprises:
determining a correlation between the first image information generated from the first inspection information and the second image information generated from the second inspection information according to the first image information and the second image information; and
determining the at least one target position of the object according to the at least one suspect position and the correlation.

5. The method according to any one of claims 1 to 4, further comprising:
determining the current coordinate information of the at least one target position according to a current position of the at least one target position relative to the first imaging beam plane and coordinates of the first imaging beam plane after the second inspection is completed and before the conveying system moves the object from the first imaging beam plane to the second imaging beam plane.

6. The method according to claim 5, wherein the controlling the conveying system to move the object from the first imaging beam plane to the second imaging beam plane according to the predetermined distance and a current coordinate information of the at least one target position comprises:
calculating a distance from the at least one target position to the second imaging beam plane according to the predetermined distance and the current coordinate information of the at least one target position; and
moving the object in a conveying direction by the calculated distance from the first imaging beam plane by the conveying system, so as to locate the at least one target position on the second imaging beam plane.

7. The method according to claim 6, wherein the at least one target position comprises one or more target positions, and the method comprises:
controlling the conveying system to move the object from the first imaging beam plane to the second imaging beam plane according to the predetermined distance and current coordinate information of each target position in the at least one target position, so that each target position is sequentially located on the second imaging beam plane to perform the third inspection.

8. The method according to any one of claims 1 to 4 and 6 to 7, wherein the coordinate information comprises a first-direction coordinate information and a second-direction coordinate information, and the controlling the conveying system to move the object from the first imaging beam plane to the second imaging beam plane according to the predetermined distance and a current coordinate information of the at least one target position comprises:
controlling an inspection component configured to form the second imaging beam plane to move in a first direction according to the first-direction coordinate information of the at least one target position; and
controlling the conveying system to move the object in a second direction according to the predetermined distance and the second-direction coordinate information of the at least one target position, so that the at least one target position is located on the second imaging beam plane, wherein the second direction is parallel to a conveying direction of the conveying system, and the first direction is perpendicular to the second direction.

9. The method according to claim 6 or 7, further comprising: after moving the object in the conveying direction by the calculated distance from the first imaging beam plane by the conveying system,
determining whether a conveying distance deviation in the conveying direction has occurred in the conveying system.

10. The method according to claim 9, further comprising:
in response to determining that a conveying distance deviation in the conveying direction has occurred in the conveying system, continuing to move the object by the conveying system according to the conveying distance deviation so that the at least one target position is located on the second imaging beam plane.

11. The method according to claim 9, wherein the conveying system comprises a conveyor belt for conveying the object, a driving roller for driving the conveyor belt to rotate, and a driven roller arranged downstream of the driving roller in the conveying direction and in frictional engagement with the conveyor belt, the method further comprising:
determining a rotation distance that the driving roller is required to rotate in order to move the conveyor belt by the calculated distance in the conveying direction; and
driving the driving roller to rotate according to the determined rotation distance so as to drive the conveyor belt to move in the conveying direction, wherein the conveying distance deviation is a difference between an actual distance the conveyor belt moves while the driving roller rotates by the calculated rotation distance and the calculated distance.

12. The method according to claim 11, wherein the conveying system further comprises a first encoder and a second encoder, the first encoder is disposed at the driving roller or at a motor for driving the driving roller to rotate so as to generate an encoded value corresponding to a rotation position of the driving roller or the motor, the second encoder is disposed at the driven roller so as to generate an encoded value corresponding to a rotation position of the driven roller, the method comprising:
acquiring a first initial encoded value from the first encoder indicating an initial position of the driving roller and a second initial encoded value from the second encoder indicating an initial position of the driven roller when the conveying system starts moving the object from the first imaging beam plane to the second imaging beam plane after the second inspection is completed;
calculating a first stop encoded value of the first encoder when the driving roller stops rotating after the conveyor belt has moved the calculated distance in the conveying direction, wherein the determining the rotation distance comprises calculating the first stop encoded value;
driving the driving roller to rotate so as to drive the conveyor belt and the driven roller to rotate until a current encoded value of the first encoder reaches the first stop encoded value, and acquiring a second stop encoded value of the second encoder indicating a stop position of the driven roller at that point; and
determining whether a conveying distance deviation of the conveyor belt has occurred according to the first initial encoded value, the second initial encoded value, the first stop encoded value, and the second stop encoded value.

13. The method according to claim 12, wherein the determining whether a conveying distance deviation of the conveyor belt has occurred according to the first initial encoded value, the second initial encoded value, the first stop encoded value, and the second stop encoded value comprises:
determining a first value representing a rotation distance of the driving roller according to the first initial encoded value and the first stop encoded value;
determining a second value representing a rotation distance of the driven roller according to the second initial encoded value and the second stop encoded value;
determining that no conveying distance deviation of the conveyor belt has occurred if the first value is equal to the second value; and
determining that a conveying distance deviation of the conveyor belt has occurred if the first value is not equal to the second value.

14. The method according to claim 12, further comprising:
adjusting a tension of the conveyor belt if it is determined that a conveying distance deviation of the conveyor belt has occurred.

15. The method according to any one of claims 1 to 14, wherein the first inspection system comprises a CT or DR inspection device, and the second inspection system comprises a DR inspection device for generating the first imaging beam plane and an XRD inspection device for generating the second imaging beam plane.

16. An imaging inspection system, comprising a first inspection system, a second inspection system, a conveying system, and a processor, wherein:
the first inspection system is configured to perform a first inspection on an object to generate a first inspection information;
the conveying system is configured to convey the object from the first inspection system to the second inspection system;
the second inspection system is configured to generate a first imaging beam plane and a second imaging beam plane for inspecting the object conveyed by the conveying system, so as to perform a second inspection on the object and generate a second inspection information when the object is located on the first imaging beam plane, and a predetermined distance is provided between the first imaging beam plane and the second imaging beam plane;
the processor is configured to:
determine at least one suspect position of the object according to the first inspection information;
determine at least one target position of the object according to the first inspection information and the second inspection information, wherein the target position is associated with the suspect position; and
control the conveying system to move the object from the first imaging beam plane to the second imaging beam plane according to the predetermined distance and a current coordinate information of the at least one target position, so that the at least one target position of the object is located on the second imaging beam plane; and
the second inspection system is further configured to perform a third inspection on the object when the at least one target position of the object is located on the second imaging beam plane, and the current coordinate information is a coordinate information of the at least one target position after the second inspection is completed and before the conveying system moves the object from the first imaging beam plane to the second imaging beam plane.

17. The imaging inspection system according to claim 16, wherein the processor is further configured to:
generate a first image information of the object according to the first inspection information; and
determine the at least one suspect position of the object according to the first image information.

18. The imaging inspection system according to claim 17, wherein the processor is further configured to generate a second image information of the object according to the second inspection information before determining the at least one target position of the object according to the first inspection information and the second inspection information.

19. The imaging inspection system according to claim 18, wherein the processor is further configured to:
determine a correlation between the first image information generated from the first inspection information and the second image information generated from the second inspection information according to the first image information and the second image information; and
determine the at least one target position of the object according to the at least one suspect position and the correlation.

20. The imaging inspection system according to any one of claims 16 to 19, wherein the processor is further configured to:
determine the current coordinate information of the at least one target position according to a current position of the at least one target position relative to the first imaging beam plane and coordinates of the first imaging beam plane after the second inspection is completed and before the conveying system moves the object from the first imaging beam plane to the second imaging beam plane.

21. The imaging inspection system according to claim 20, wherein the processor is further configured to:
calculate a distance from the at least one target position to the second imaging beam plane according to the predetermined distance and the current coordinate information of the at least one target position; and
move the object in a conveying direction by the calculated distance from the first imaging beam plane by the conveying system, so as to locate the at least one target position on the second imaging beam plane.

22. The imaging inspection system according to claim 21, wherein the at least one target position comprises one or more target positions; and
wherein the processor is further configured to control the conveying system to move the object from the first imaging beam plane to the second imaging beam plane according to the predetermined distance and current coordinate information of each target position in the at least one target position, so that each target position is sequentially located on the second imaging beam plane to perform the third inspection.

23. The imaging inspection system according to any one of claims 16 to 19 and 21 to 22, wherein the coordinate information comprises a first-direction coordinate information and a second-direction coordinate information; and
wherein the processor is further configured to:
control an inspection component configured to form the second imaging beam plane to move in a first direction according to the first-direction coordinate information of the at least one target position; and
control the conveying system to move the object in a second direction according to the predetermined distance and the second-direction coordinate information of the at least one target position, so that the at least one target position is located on the second imaging beam plane, wherein the second direction is parallel to a conveying direction of the conveying system, and the first direction is perpendicular to the second direction.

24. The imaging inspection system according to claim 21 or 22, wherein the processor is further configured to determine whether a conveying distance deviation in the conveying direction has occurred in the conveying system after moving the object in the conveying direction by the calculated distance from the first imaging beam plane by the conveying system.

25. The imaging inspection system according to claim 24, wherein the processor is further configured to, in response to determining that a conveying distance deviation in the conveying direction has occurred in the conveying system, continue to move the object by the conveying system according to the conveying distance deviation so that the at least one target position is located on the second imaging beam plane.

26. The imaging inspection system according to claim 24, wherein the conveying system comprises a conveyor belt for conveying the object, a driving roller for driving the conveyor belt to rotate, and a driven roller arranged downstream of the driving roller in the conveying direction and in frictional engagement with the conveyor belt; and
wherein the processor is further configured to:
determine a rotation distance that the driving roller is required to rotate in order to move the conveyor belt by the calculated distance in the conveying direction; and
drive the driving roller to rotate according to the determined rotation distance so as to drive the conveyor belt to move in the conveying direction, wherein the conveying distance deviation is a difference between an actual distance the conveyor belt moves while the driving roller rotates by the calculated rotation distance and the calculated distance.

27. The imaging inspection system according to claim 26, wherein the conveying system further comprises a first encoder and a second encoder, the first encoder is disposed at the driving roller or at a motor for driving the driving roller to rotate so as to generate an encoded value corresponding to a rotation position of the driving roller or the motor, the second encoder is disposed at the driven roller so as to generate an encoded value corresponding to a rotation position of the driven roller; and
wherein the processor is further configured to:
acquire a first initial encoded value from the first encoder indicating an initial position of the driving roller and a second initial encoded value from the second encoder indicating an initial position of the driven roller when the conveying system starts moving the object from the first imaging beam plane to the second imaging beam plane after the second inspection is completed;
calculate a first stop encoded value of the first encoder when the driving roller stops rotating after the conveyor belt has moved the calculated distance in the conveying direction, wherein the determining the rotation distance comprises calculating the first stop encoded value;
drive the driving roller to rotate so as to drive the conveyor belt and the driven roller to rotate until a current encoded value of the first encoder reaches the first stop encoded value, and acquire a second stop encoded value of the second encoder indicating a stop position of the driven roller at that point; and
determine whether a conveying distance deviation of the conveyor belt has occurred according to the first initial encoded value, the second initial encoded value, the first stop encoded value, and the second stop encoded value.

28. The imaging inspection system according to claim 27, wherein the processor is further configured to:
determine a first value representing a rotation distance of the driving roller according to the first initial encoded value and the first stop encoded value;
determine a second value representing a rotation distance of the driven roller according to the second initial encoded value and the second stop encoded value;
determine that no conveying distance deviation of the conveyor belt has occurred if the first value is equal to the second value; and
determine that a conveying distance deviation of the conveyor belt has occurred if the first value is not equal to the second value.

29. The imaging inspection system according to claim 27, wherein the processor is further configured to: adjust a tension of the conveyor belt if it is determined that a conveying distance deviation of the conveyor belt has occurred.

30. The imaging inspection system according to any one of claims 16 to 29, wherein the first inspection system comprises a CT or DR inspection device, and the second inspection system comprises a DR inspection device for generating the first imaging beam plane and an XRD inspection device for generating the second imaging beam plane.
